# EUROPEAN PATENT SPECIFICATION

(11) **EP 1 424 451 B1**
(45) Date of publication and mention of the grant of the patent: **16.12.2009**
(21) Application number: 02807629.7
(22) Date of filing: 11.10.2002
(51) Int. Cl.: E04B 1/98, E04H 6/42, B29C 41/32

(54) **METHOD FOR MANUFACTURING ANTI-FRICTION PROTECTORS USED IN RESISTANT ELEMENTS OF BUILDINGS**
HERSTELLUNGSVERFAHREN VON IN WIDERSTANDSELEMENTEN VON GEBÄUDEN VERWENDETEN REIBSCHUTZVORRICHTUNGEN
PROCEDE DE FABRICATION DE PROTECTIONS ANTI-FROTTEMENTS DANS DES ELEMENTS RESISTANTS DE BATIMENTS

(30) Priority: 22.07.2002 ES 200201713
(43) Date of publication of application: 02.06.2004
(73) Proprietor: Diaz Alcaraz, Luis, 01010 Vitoria (ES)
(72) Inventor: Diaz Alcaraz, Luis, 01010 Vitoria (ES)
(74) Representative: Esteban Perez-Serrano, Maria Isabel
(86) International application number: PCT/ES2002/000479
(87) International publication number: WO 2004/011733

(56) References cited:
- EP-A- 1 118 461
- ES-A- 2 073 345
- ES-U- 1 045 201
- ES-U- 1 048 153
- US-A- 3 375 311
- US-A- 4 729 908

## Description

### OBJECT OF THE INVENTION

The present invention relates to a manufacturing method for scrape protector for strength members of buildings, from among the various elements providing protection against scrapes and collisions of persons and vehicles during parking manoeuvres, as well as among the various ornamental elements.

This invention is characterised by a special construction of the protector, which is comprised of a base body, preferably fireproof, that absorbs pressures derived of improper approximations, such as that of a child's head to a wall, corner, column or other jutting member of a playground, or that of a vehicle to the column or wall.

The protector is coated with a number of sheets of different colours and lengths, joined to a textile support so that these bands that are arranged vertically and manufactured horizontally, with different colours, can merely protect and decorate or, in addition, can provide orientation to the driver during the approach manoeuvre.

### BACKGROUND OF THE INVENTION

In the induction based manufacture of layers in plastic materials, the plastisol or mass after given its desired colour is introduced in the hopper disposed superiorly and deposited on a transfer paper unwound from a coil, in its path towards the drying oven by jollification, with the plastic sheet thus obtained then transferred to the fireproof or self-extinguishing support by means of heat and pressure.

If in theory a multicolour sheet were to be manufactured with longitudinal bands of the same or different width, it would suffice to apply in the hopper a number of thin partitions arranged with the same width as that desired for the corresponding sheet bands.

In this case, the transfer paper would receive discontinuous segments with a separation resulting from the thickness of the partition placed in the hopper, or even spillages, possibly overlapping, that in any event when applying the multicolour sheets on the support of textile, plastic or any other suitable material would not appear as a continuous sheet.

In addition, these coloured sheets deposited on the textile support usually receive different finishes, so that in certain cases, as when created using engraved rollers that provide the final product with texture and grain, result in the uneven edge finish standing out even more.

it is known from the state of the art a manufacturing method of a scrape protector for strength members of buildings as the one disclosed in ES-U-1048153 wherein it is disclosed a protector having a base preferably fireproof and which absorbs pressures and it is made of cellular plastic material and adhered to a textile support or a plastic polymer coated with several sheets of reflecting colours with different lengths to determine bands, nevertheless it is not disclosed how those sheets of different lengths and with different widths are obtained.

The applicant is not aware of the existence of products or procedures that solve the problems described above with the simplicity and effectiveness of the invention described hereinafter.

### DESCRIPTION OF THE INVENTION

The present invention relates to a scrape protector, applicable by any conventional procedure such as gluing, self-adhesion or simply tying to columns or areas of problematic turnings, whether in garages or other areas where vehicles pass by or are displayed, and to the method for manufacturing it, from among the various protection elements for vehicles during parking manoeuvres.

The invention is characterised by a special construction of the protector, that includes a fireproof or highly fire-retardant base that also absorbs pressures resulting from, for example, the vehicle to the column, made of a cellular plastic material that is adhered conventionally to the textile support of cotton, polymer thread fabric, polyester, polyamide, not excluding other plastic materials with a suitable treatment.

Said textile support joined to the base body is coated with several sheets of normal, fluorescent or reflecting colours and with different lengths, so that because of their size these bands, disposed vertically with different colours, are easily visible by the driver of the approaching vehicle.

The set of coloured bands, after taking suitable reference points, allow the user of the garage or premises to be easily orientated, speeding the approximation and parking manoeuvres or passage of the driver.

After mixing the paste formed by different polymers, depending on the product to be made and on the type and characteristics of the selected colour, all of this conventionally, what characterises the method of the invention is the successive passage of the unrolled paper under a number of aligned hoppers provided with different partitions that limit the extension of the plastisol to bands of different widths before reaching the drying oven.

It is equally possible to pass the paper under a single hopper consecutively for each colour with said hopper being provided in each occasion with a partition at the desired distance.

The paper enters the drying oven after each colour is deposited and it is then rolled again at the oven outlet, to again be extended and passed under the same hopper with a gradually diminishing outlet area until the last layer of plastisol is deposited, at which time the paper is sent to the oven for the last time and the product is ready for its conventional transfer to the base support.

### DESCRIPTION OF THE DRAWINGS

The present description is accompanied by a set of drawings of a preferred embodiment provided for purposes of illustration and not limiting the invention.

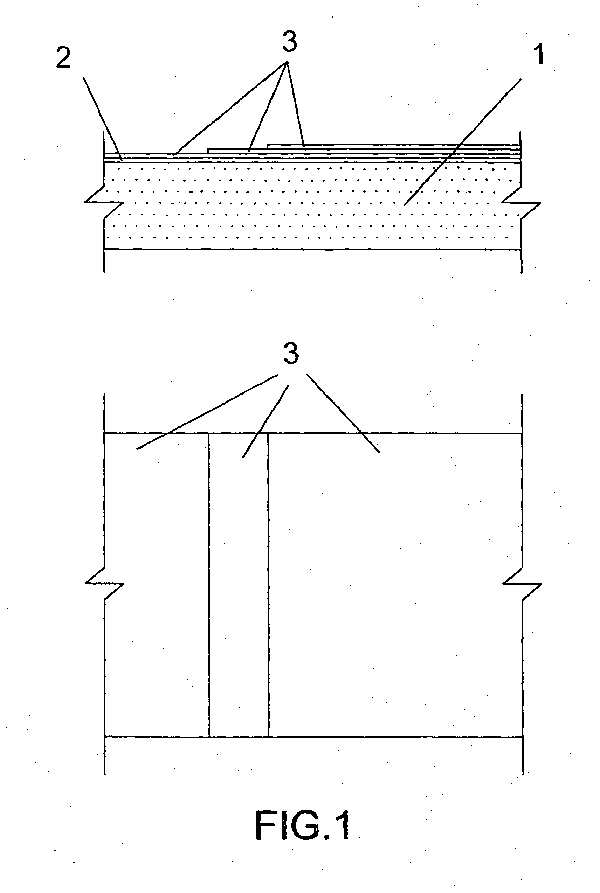

Figure 1 is an elevation and plan view of the product of the invention.

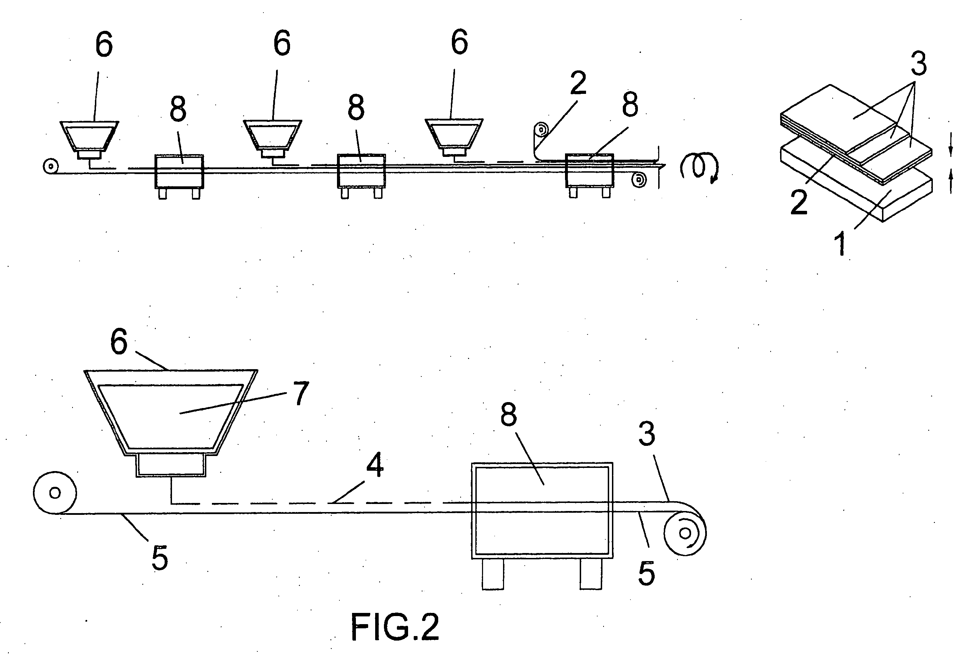

Figure 2 is a schematic representation of each alternative construction of the preferred embodiment: firstly shown, in an elevation view, is the line of hoppers and ovens in the construction alternative with successive sheets in an operation prior to its attachment to the textile support that will be finally joined to the base body, showing said union in a perspective view; secondly shown is one of the constructive stages of the various sheets on a single hopper and oven assembly without yet incorporating the textile support.

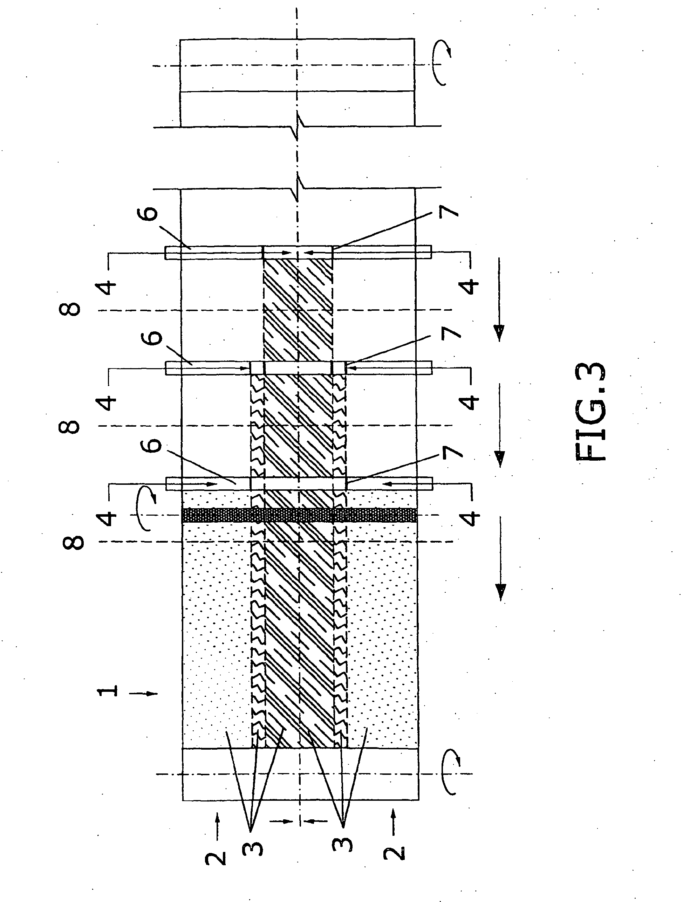

Figure 3 is a schematic plan view of the transfer paper bearing a double band, between its successive winding and unwinding coils, with the longitudinal axial line indicating the cutting axis of the two final bands and the transverse lines respectively indicating the rotation axes of the coils, the axes of the consecutive ovens and the axis of the rollers joining the base to the textile support of the protector sheets.

### PREFERRED EMBODIMENT OF THE INVENTION

In view of the above, the present invention relates to a manufacturing method for scrape protector for strength members of buildings, from among the various collision and scrape protectors for people and vehicles during parking operations, **characterised in that** the protector has a base body (1) that is preferably fireproof and absorbs pressures, made of cellular plastic material, suitably adhered to a textile support (2) made of cotton material, polymer thread or directly a plastic polymer coated with several sheets of normal, fluorescent or reflecting colours and with different lengths, to determine bands (3) of different height disposed vertically, which facilitate the driver's manoeuvres.

After the plastisol (4) is conventionally obtained and before it reaches the induction drying oven (8), the method of the invention is characterised by making the paper (5) pass several times under a series of aligned hoppers (6) prepared with various partitions (7) of the plastisol (4) that define the various projection widths, even managing to optimise the production by a mirror-image duplication of the assembly comprised of the textile support (2) and the bands (3) and with a double winding with the protector that is later cut by a conventional procedure.

After depositing the last band (3) and before the assembly enters the last oven (8) from the area above the bands (3) is superposed a new unwound line of textile support (2) that gradually fuses with said bands so that, at the outlet of the last oven (8) it is possible to separate the paper (5) and wind it for reuse, with the bands (3) remaining attached to the support (2) and ready to be joined to the base (1).

With this same procedure, it is possible to change the number and arrangement of ovens, hoppers, feeding means and other additional elements of this method, in view of the planned volume of production of the protector, so that instead of as many ovens and hoppers provided as there are colours (top drawing of Figure 2), or the mirror image duplication (as shown in Figure 3) a more restricted production case is used such as a minimal one with one hopper and one oven.

Thus, it is equally possible to make the paper (5) pass slowly and repeatedly under a single hopper (6), the ears of which gently rub against the paper (5) to limit the deposition of plastisol (4), which takes place consecutively for each colour by providing a partition (7) for each passage of the paper (5) and at the desired distance, as well as with the paper (5) after each application passing into the oven (8) and winding the paper (5) again with the edges of the various bands (3) almost adjacent after each exit of the oven (8), then unwinding again to pass by the same hopper (6) that has an outlet area that is gradually diminishing until the last layer of plastisol is applied, to pass one final time through the oven (8) before its is conventionally transferred onto the textile support and conventionally glued onto the base (1).

The essence of this invention is not affected by variations in the materials, shape, size and arrangement of its component elements, described in a non-limiting manner so that an expert in the field should be able to reproduce it.

## Claims

1. Manufacturing method for scrape protector for strength members of buildings, from among the various collision and scrape protectors for people and vehicles during parking operations, wherein the protector has a base body (1) that is preferably fireproof and absorbs pressures, made of cellular plastic material, conventionally adhered to a textile support (2) made of cotton material, polymer thread or, directly, a plastic polymer coated with several sheets of normal, fluorescent or reflecting colours with different lengths, to determine bands (3) manufactured longitudinally and later disposed vertically,
the method including an induction oven (8) for drying plastisol,
**characterised in that**
the method further includes a slow and repeated passage of a paper (5) under a single hopper 6 the cars of which gently rub against the paper 5 to limit the deposition of plastisol (4), which takes place consecutively for each colour by providing a partition (7) for each passage of the paper 5 and at the desired distance, as well as with the paper 5 passing after each application into the oven (8) and winding the paper (5) again with the edges of the various bands (3) almost adjacent to each other after each exit of the oven (8), the paper (5) then unwinding again to pass under the same hopper (6), which hopper (6) is provided with a gradually diminishing outlet area, until the last layer of plastisol is applied and it is heat-transferred onto the textile support (3), before passing for the last time through the oven (8) and later joined to the base (1).

2. Manufacturing method for the scrape protector for strength members of buildings, according to claim 1, **characterised in that** after the last band (3) is deposited and before the assembly enters the last oven (8) a new unwound line of textile support (2) is superposed onto the bands (3) that gradually fuses with said bands so that at the outlet of the last oven (8) it is possible to separate the paper (5) and wind it for its reuse, with the bands (3) remaining attached to the support (2) and ready to be joined to the base (1).

3. Manufacturing method for the scrape protector for strength members of buildings, according to the above claims 1 and 2, **characterised in that** it is equally possible to make the paper (5) pass successively under a plurality of hoppers (6) prepared with different partitions (7) for the plastisol (4), that define the various projection widths and are aligned and alternating with the ovens (8).

4. Manufacturing method for the scrape protector for strength members of buildings, according to the above claims 1 to 3, **characterised in that** the protector is mirror-image duplicated by a mirror-image duplication of the bands (3) to produce a double protector coil which is later cut centrally

## Patentansprüche

1. Verfahren zur Herstellung einer Kratzschutzeinrichtung für tragende Bauteile von Gebäuden in Form unterschiedlicher Kollisions- und Kratzschutzeinrichtungen für Personen und Fahrzeuge bei Parkvorgängen, wobei die Schutzeinrichtung einen vorzugsweise feuerfesten und druckabsorbierenden Grundkörper (1) aus Schaumstoffmaterial aufweist, der üblicherweise auf einem textilien Träger (2) aus Baumwollmaterial oder Polymerfäden aufgebracht ist oder direkt ein mit mehreren Schichten unterschiedlicher Länge normaler, fluoreszierender oder reflektierender Farben beschichtetes Kunststoffpolymer zur Festlegung von Streifen (3) umfasst, die in Längsrichtung hergestellt und später vertikal angebracht werden, wobei das Verfahren einen Induktionsofen (8) zur Trocknung von Plastisol umfasst, **dadurch gekennzeichnet, dass** das Verfahren darüber hinaus einen langsamen und wiederholten Durchlauf eines Papiers (5) unter einem einzigen Trichter (6) umfasst, dessen Wangen leicht auf dem Papier (5) reiben um den Auftrag von Plastisol (4) zu begrenzen, der nacheinander für jede Farbe durch Vorsehen einer Begrenzung (7) bei dem gewünschten Abstand für jeden Durchlauf des Papiers (5) erfolgt, wobei das Papier (5) nach jedem Auftrag den Ofen (8) durchläuft und das Papier (5) mit den Kanten der einzelnen fast unmittelbar benachbarter Streifen (3) nach jedem Austritt aus dem Ofen (8) aufgewickelt wird, wobei das Papier (5) anschließend erneut abgewickelt wird und unter dem selben Trichter (6) durchläuft, wobei der Trichter (6) mit einem zunehmend kleineren Auslaufbereich versehen wird, bis die letzte Plastisolschicht aufgetragen ist und vor dem letzten Durchlauf durch den Ofen (8) mittels Wärme auf einen textilen Träger (3) übertragen und später mit dem Grundkörper (1) verbunden wird.

2. Verfahren zur Herstellung der Kratzschutzeinrichtung für tragende Bauteile von Gebäuden gemäß Anspruch 1, **dadurch gekennzeichnet, dass** nach Auftrag des letzten Streifens (3) und vor Eintritt des Verbunds in den letzten Ofen (8) ein neu abgewickelter textiler Träger auf die Streifen (3) gelegt wird, der nach und nach mit besagten Streifen verschmilzt, so dass das Papier (5) am Austritt aus dem letzten Ofen (8) abgetrennt und zur Wiederverwendung aufgewickelt werden kann, wobei die Streifen (3) auf dem Träger (2) haften und zur Verbindung mit der Unterlage (1) bereit stehen.

3. Verfahren zur Herstellung der Kratzschutzeinrichtung für tragende Bauteile von Gebäuden gemäß den vorhergehenden Ansprüchen 1 und 2, **dadurch gekennzeichnet, dass** es ebenso möglich ist, das Papier (5) nacheinander unter einer Mehrzahl von Trichtern (6) durchlaufen zu lassen, die mit unterschiedlichen Trenneinrichtungen (7) für das Plastisol (4) versehen sind, die unterschiedliche Auftragsbreiten definieren und mit den Öfen (8) abwechseln, auf welche sie ausgerichtet sind.

4. Verfahren zur Herstellung der Kratzschutzeinrichtung für tragende Bauteile von Gebäuden gemäß den vorhergehenden Ansprüchen 1 bis 3, **dadurch gekennzeichnet, dass** die Schutzeinrichtung durch spiegelbildliche Doppelung der Streifen (3) zur Herstellung eines doppelten Wickels der Schutzeinrichtung spiegelbildlich gedoppelt ist, der anschließend in der Mitte aufgetrennt wird.

## Revendications

1. Procédé de fabrication de protecteur contre égratignures pour porteurs centraux de bâtiments, du type des divers protecteurs contre collision et égratignures'pour des personnes et des véhicules pendant les opérations de stationnement, dans lequel le protecteur a un corps de base (1) qui est de préférence étanche à l'eau et absorbe les pressions, il est fait en matière plastique cellulaire, conventionnellement adhéré à un support textile (2) fabriqué en coton fil polymérique ou directement en polymère plastique revêtu de diverses feuilles de couleurs normales, fluorescentes ou réfléchissantes avec différentes longueurs, pour déterminer des bandes (3) fabriquées longitudinalement et plus tard disposées verticalement,
le procédé incluant un four d'induction (8) pour sécher le plastisol,
**caractérisé en ce que**
le procédé inclut, en outre, un passage lent et répété d'un papier (5) sous une seule trémie (6) dont les bourrelets frottent légèrement contre le papier (5) pour limiter la pose de plastisol (4), qui a lieu consécutivement pour chaque couleur en fournissant une séparation (7) pour chaque passage du papier (5) et à la distance voulue, tout comme avec le papier (5) qui passe après chaque application dans le four (8) et on enroule le papier à nouveau avec les bords des diverses bandes (3) presque attenantes les unes aux autres après chaque sortie du four (8), le papier (5) est alors déroulé à nouveau pour passer sous la même trémie (6), ladite trémie (6) est pourvue d'une zone de sortie se réduisant graduellement, jusqu'à l'application de la dernière couche de plastisol et elle est transférée par chaleur sur le support textile (3), avant le dernier passage au four (8) en s'unissant plus tard à la base (1).

2. Procédé de fabrication du protecteur contre égratignures pour porteurs centraux de bâtiments selon la revendication 1, **caractérisé en ce qu'**après la pose de la dernière bande (3) et avant l'introduction de l'ensemble dans le dernier four (8) on superpose une nouvelle ligne déroulée de support textile (2) sur les bandes (3) qui se fond graduellement avec lesdites bandes de manière à ce qu'à la sortie du dernier four (8) il est possible de séparer le papier (5) et l'enrouler pour sa réutilisation, les bandes (3) demeurant fixées au support (2) et prêtes à s'unir à la base (1).

3. Procédé de fabrication du protecteur contre égratignures pour porteurs centraux de bâtiments, selon les revendications précédentes 1 et 2, **caractérisé en ce qu'**il est également possible de faire que le papier (5) passe successivement sous une pluralité de trémies (6) préparées avec différentes séparations (7) pour le plastisol (4), qui définissent les diverses largeurs de projection et qui sont alignées et alternées avec les fours (8).

4. Procédé de fabrication du protecteur contre égratignures pour porteurs centraux de bâtiments selon les revendications précédentes 1 à 3, **caractérisé en ce que** le protecteur est dupliqué en miroir par une duplication en miroir des bandes (3) pour produire une bobine de protection double qui est plus tard coupée au centre.
